# FASCICULE DE BREVET EUROPEEN

(11) **EP 3 298 468 B1**
(45) Date de publication et mention de la délivrance du brevet: **14.07.2021**
(21) Numéro de dépôt: 16725081.0
(22) Date de dépôt: 19.05.2016
(51) Int. Cl.: G05D 11/00

(54) **DISPOSITIF DE RÉGULATION DE DÉBIT ET SYSTÈME DE MÉLANGE COMPRENANT UN TEL DISPOSITIF**
FLUSSSTEUERUNGSVORRICHTUNG UND MISCHSYSTEM MIT SOLCH EINER VORRICHTUNG
FLOW CONTROL DEVICE AND MIXING SYSTEM COMPRISING SUCH A DEVICE

(30) Priorité: 19.05.2015 FR 1554456
(43) Date de publication de la demande: 28.03.2018
(73) Titulaire: Exel Industries, 51200 Epernay (FR)
(72) Inventeur: SPICA, Maxime, 01990 St Trivier-sur-Moignans (FR); BARON, Sébastien, 01600 Trevoux (FR)
(74) Mandataire: CSY London
(86) Numéro de dépôt international: PCT/EP2016/061199
(87) Numéro de publication internationale: WO 2016/184938

(56) Documents cités:
- BE-A2- 897 500
- FR-A- 1 198 559
- US-A- 4 554 948
- US-A- 5 402 821
- US-B1- 6 945 264

## Description

La présente invention concerne un dispositif de régulation du débit d'un liquide, ainsi qu'un système de mélange d'un produit chimique avec de l'eau comprenant un tel dispositif de régulation.

Les dispositifs de régulation du débit d'un liquide connus de l'état de la technique ne permettent pas d'obtenir de faibles débits de liquide réglables très précisément, notamment pour la pulvérisation de produits phytosanitaires mélangés avec de l'eau selon des concentrations très précises.

FR 1 198 559 A concerne un dispositif pour le réglage de fluides s'écoulant sous pression élevée. Il comprend un ensemble de six tiroirs rotatifs solidaires en rotation les uns des autres et percés chacun de deux ouvertures identiques et opposées diamétralement, des disques fixes étant interposés entre les disques rotatifs et percés chacun d'une pluralité d'orifices identiques, l'ensemble de six tiroirs pouvant être déplacé en rotation pour mettre en vis-à-vis l'un des orifices des disques rotatifs avec les orifices des disques fixes. Un réglage du débit de la vanne est possible via un pointeau et un renvoi mécanique.

BE 897 500 A2 concerne un régulateur de débit relativement compact pour liquides dont le débit peut être contrôlé entre une valeur relativement basse et une valeur élevée et dont le débit de sortie est pratiquement constant.

US 5 402 821 A concerne une vanne de détente réglable pour une utilisation dans les systèmes de réfrigération. La vanne comporte un unique disque fixe et un unique disque mobile en rotation par rapport au disque fixe, le disque mobile comportant plusieurs orifices de diamètres différents. Le débit de la vanne étant réglable manuellement via un pointeau.

US 6 945 264 B1 concerne une vanne de régulation de débit variable.

C'est à ces inconvénients qu'entend remédier l'invention en proposant un nouveau dispositif de régulation du débit d'un liquide, permettant de régler avec une grande précision de faibles débits de liquide.

A cet effet, l'invention concerne un dispositif de régulation du débit d'un liquide dans une canalisation selon la revendication 1.

Grâce à l'invention, le débit de liquide peut être réglé très finement grâce au passage du liquide dans de multiples orifices qui permettent d'obtenir de faibles débits réglables précisément.

Selon des aspects avantageux mais non obligatoires de l'invention, un tel dispositif peut incorporer une ou plusieurs des caractéristiques suivantes, prises dans toute combinaison techniquement admissible :
- Les orifices respectifs de deux disques intermédiaires adjacents et les orifices respectifs de deux disques rotatifs adjacents sont décalés angulairement par rapport à un axe central du dispositif, de préférence d'un angle de 180°.
- Chaque disque intermédiaire comprend deux orifices diamétralement opposés par rapport à un axe central du dispositif.

Le cadran est muni de repères de positionnement adaptés pour être visualisés à travers une ouverture du corps creux.
- Les disques intermédiaires sont montés de manière fixe dans un tube monté de façon fixe dans le corps creux, et en ce que les disques rotatifs sont montés de façon rotative dans le tube.
- L'élément de réglage comprend trois disques rotatifs.
- Le dispositif comprend trois éléments de réglage réglables indépendamment.
- Chaque disque rotatif comprend quatre orifices de diamètres croissants.
- Les disques rotatifs sont solidarisés en rotation les uns aux autres par des formes protubérantes complémentaires qui s'étendent à travers des trous ménagés dans les disques intermédiaires.

L'invention concerne également un système de mélange d'un produit chimique avec de l'eau selon la revendication 10.

L'invention sera mieux comprise et d'autres avantages de celle-ci apparaitront plus clairement à la lumière de la description qui va suivre d'un dispositif de régulation et d'un système de mélange conformes à son principe, faite à titre d'exemple non limitatif en référence aux dessins annexés dans lesquels :
- la figure 1 est une vue schématique d'un système de mélange conforme à un premier mode de réalisation de l'invention ;
- les figures 2 à 7 sont des vues schématiques d'un système de mélange conforme à un deuxième mode de réalisation de l'invention, dans plusieurs configurations d'utilisation ;
- les figures 8 et 9 sont des vues schématiques d'un système de mélange conforme à un troisième mode de réalisation de l'invention, dans deux configurations d'utilisation ;
- la figure 10 est une vue en perspective éclatée d'un dispositif de régulation de débit conforme à l'invention appartenant aux systèmes de mélange des figures 1 à 9 ;
- la figure 11 est une vue en perspective éclatée d'une partie du dispositif des figures 10 et 11 ;
- la figure 12 est une coupe transversale selon le plan XII-XII de la partie de régulateur de débit de la figure 11 ;
- la figure 13 est une coupe longitudinale selon le plan XIII-XIII de la partie de régulateur des figures 11 et 12, le plan XII-XII étant représenté sur cette figure ;
- la figure 14 est une vue en perspective du régulateur de débit de la figure 10.

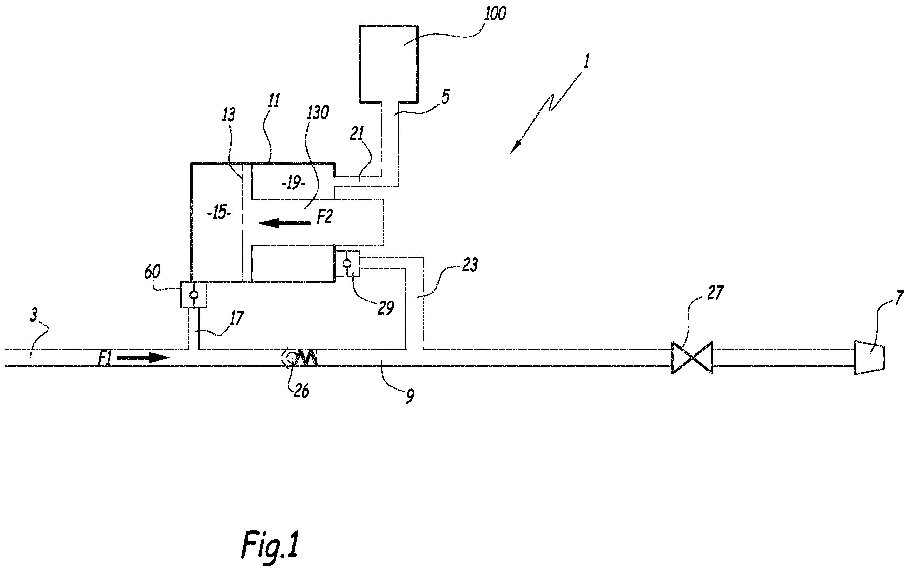

Sur la figure 1 est représenté un système de mélange 1 d'un produit chimique tel que, par exemple, un produit phytosanitaire, avec de l'eau. Le système 1 comprend un port d'entrée d'eau 3 adapté pour être relié à une canalisation d'apport d'eau sous pression, par exemple un tuyau d'arrosage. Le système 1 comprend également un port d'entrée 5 de produit chimique, adapté pour être relié à un réservoir de produit chimique. Le système 1 comprend enfin un port de sortie du mélange 7 par lequel le mélange formé par l'eau et le produit chimique est dirigé vers, par exemple, un tuyau d'arrosage ou vers une buse de dispersion du produit.

Entre le port d'entrée 3 et le port de sortie 7, le système 1 comprend une canalisation principale 9 dans laquelle de l'eau circule selon la flèche F1. On définit, par rapport au sens de circulation de l'eau dans la canalisation principale 9, un côté amont du système 1, situé du côté du port d'entrée d'eau 3, et un côté aval, situé du côté du port de sortie 7.

Le système 1 comprend une chambre principale 11 dans laquelle est mobile un piston 13 muni d'une tige 130. Le piston 13 divise la chambre 11 en deux parties. Une première partie 15, dite partie amont, située du côté gauche du piston 13 sur la figure 1, est reliée au port d'entrée 3 par une canalisation 17. Une seconde partie 19, dite partie avale, qui se trouve du côté droit du piston 13 sur la figure 1, est reliée d'une part au port d'entrée du produit 5 par une canalisation 21, et d'autre part, à la canalisation principale 9 par une canalisation 23. La partie avale 19 est donc reliée au port de sortie 7 par l'intermédiaire des canalisations 9 et 23.

Un dispositif de régulation 60 du débit d'eau dans la canalisation 17 est interposé entre la partie amont 15 et le port d'entrée 3, de sorte que la quantité d'eau passant respectivement vers la partie amont 15 et dans la canalisation principale 9 peut être contrôlée. Le dispositif 60 est également adapté pour couper la circulation d'eau dans la canalisation 17. En variante, une vanne non représentée, distincte du dispositif 60, peut être connectée sur la canalisation 17 pour activer ou désactiver la circulation d'eau dans la canalisation 17.

Par souci de clarté, le dispositif 60 est représenté sur les figures 1 à 9 avec le symbole d'une vanne, pour repérer ses configurations ouverte ou fermée.

Un clapet anti-retour 26 est connecté sur la canalisation principale 9 entre la canalisation 17 et la canalisation 23 et permet la circulation d'eau uniquement du port d'entrée 3 vers le port de sortie 7. Une vanne 27 disposée sur la canalisation principale 9 juste avant le port de sortie 7 permet d'obturer ou non la sortie du mélange par le port de sortie 7.

Lorsqu'un produit chimique doit être mélangé à une certaine quantité d'eau en utilisant le système 1, un réservoir de produit chimique 100 est préalablement raccordé au port d'entrée du produit 5. Ensuite, la tige 130 est poussée dans la partie amont 15 selon la flèche F2 à la figure 1. La tige 130 peut à cet effet comprendre une forme adaptée pour être manœuvrée manuellement. Pendant la translation du piston 13 selon la flèche F2, une vanne 29 connectée à la canalisation 23 empêche le produit de s'écouler dans la canalisation 23 et, en créant une dépression lors du déplacement de la tige 130, permet l'aspiration du produit chimique dans la partie avale 19.

Lorsque la quantité de produit chimique voulue a été injectée dans la partie avale 19, le mélange peut être réalisé. Grâce à un organe de commande non représenté, la circulation d'eau dans la canalisation principale 9 est activée. Un débit d'eau prédéterminé par le réglage du dispositif 25 entre dans la partie amont 15 par la canalisation 17, tandis qu'une partie de l'eau continue de circuler dans la canalisation 9. L'eau entrant dans la partie amont 15 exerce une force de pression sur le piston 13. Du fait de la présence de la tige 130 dans la partie avale 19, une différence de pression existe dans la partie avale 19 par rapport à la partie amont 15. En effet, la force de pression exercée par l'eau sur le piston 13 du côté de la partie amont 15 s'exerce sur une surface plus grande que la force de pression exercée par le produit chimique sur le piston 13 dans la partie avale 19. Lorsqu'une certaine quantité d'eau est présente dans la partie amont 15, la force exercée par l'eau sur le piston 13 devient supérieure à la force exercée par le produit chimique, et le piston 13 est repoussé dans la partie avale 19 dans le sens contraire à la flèche F2. Le produit chimique est donc éjecté vers la canalisation 23, via la vanne 29, qui est ouverte, où il rejoint l'eau qui circule dans la canalisation principale 9. Cela permet de réaliser le mélange entre l'eau et le produit chimique.

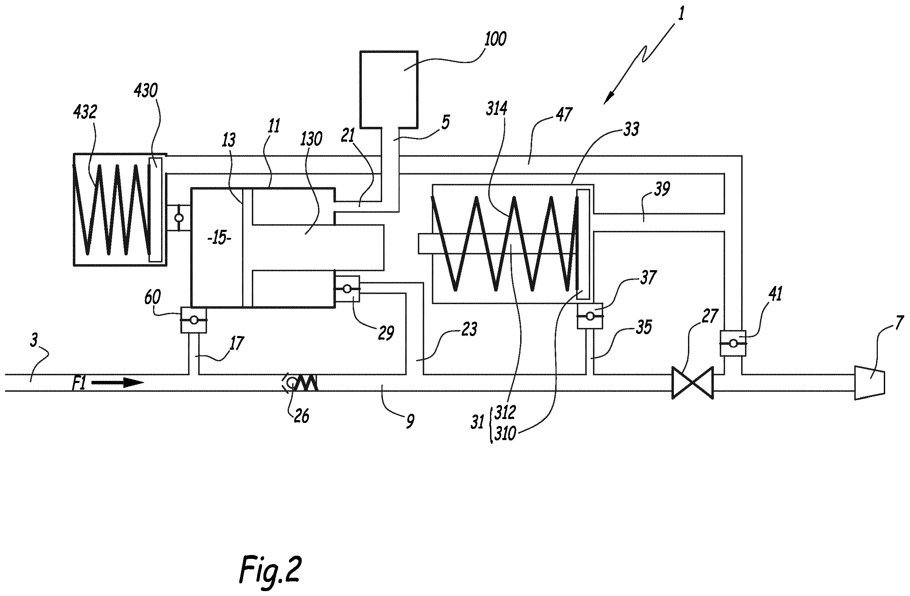

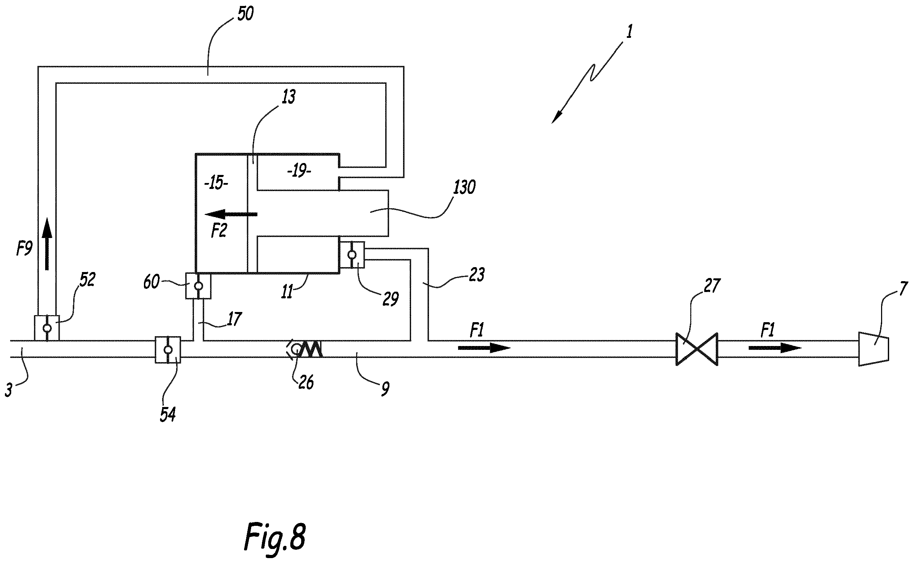

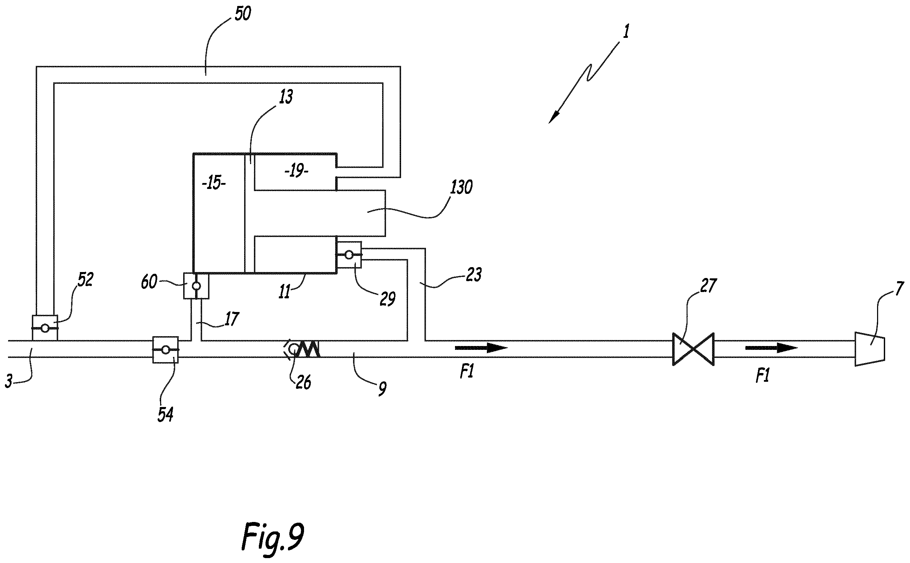

Un deuxième et un troisième mode de réalisation de l'invention sont respectivement représentés sur les figures 2 à 7 et sur les figures 8 et 9. Dans ces modes de réalisation, les éléments communs au premier mode de réalisation portent les mêmes références et fonctionnent de la même manière. Seules les différences par rapport au premier mode de réalisation sont détaillées ci-après.

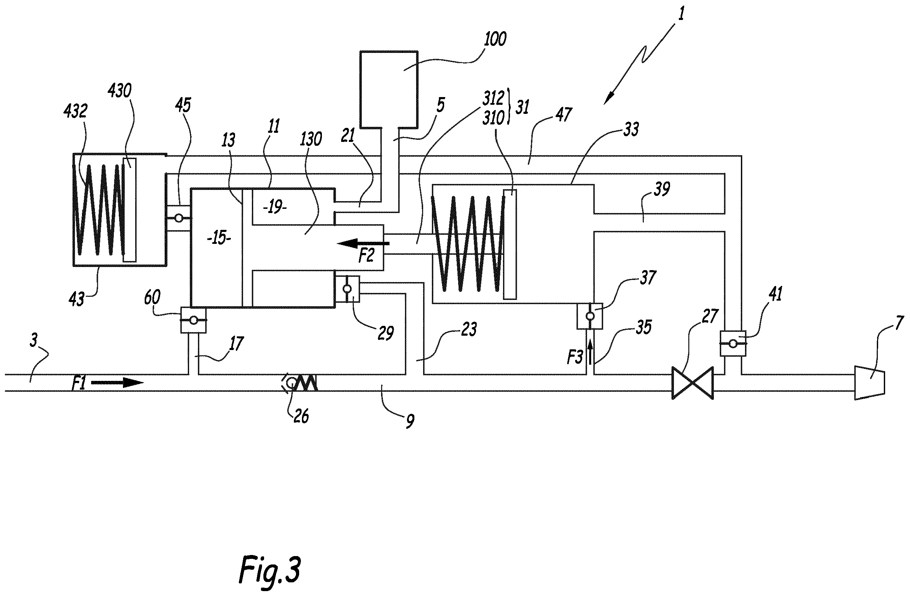

Dans le mode de réalisation des figures 2 à 7, le système 1 comprend un vérin 31 adapté pour actionner la tige 130. Le vérin 31 comprend un piston 310 et une tige 312. Le piston 310 est monté coulissant dans une chambre 33. La tige 312 fait saillie hors de la chambre 33 du côté de la tige 130. Le piston 310 se trouve à l'opposé de la tige 130. Le vérin 31 est repoussé par un élément élastique, tel qu'un ressort 314, vers une position rentrée, représentée à la figure 2, dans laquelle la tige 312 est presque entièrement située dans la chambre 33. La chambre 33 est reliée par une canalisation 35 à la canalisation principale 9. Une vanne 37 permet d'autoriser l'entrée d'eau à partir de la canalisation principale 9 dans la chambre 33 via la canalisation 35 afin de repousser le piston 310 en direction du piston 13, à l'encontre de l'effort du ressort 314, vers une position sortie du vérin 31, représentée à la figure 3, dans laquelle la tige 312 fait saillie hors de la chambre 33.

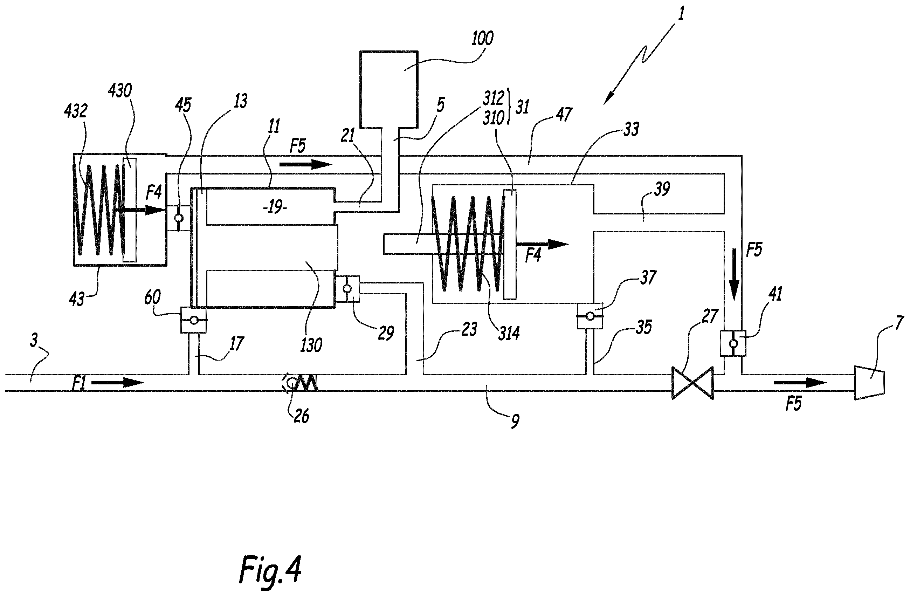

La chambre 33 peut être vidée de l'eau qu'elle contient par une canalisation 39 qui rejoint la canalisation principale 9 en aval de la vanne 27. Une vanne 41 permet d'ouvrir ou de fermer le passage de l'eau de la canalisation 39 à la canalisation principale 9. Ainsi, lorsque le vérin 31 doit être repoussé dans sa position rentrée représentée à la figure 2, la vanne 37 est fermée, ce qui empêche l'arrivée d'eau dans la chambre 33. La force du ressort 314 repousse donc à nouveau le vérin 31 dans sa position rentrée. La vanne 41 est ouverte et l'eau contenue dans la chambre 33 est chassée par la canalisation 39 vers la canalisation principale 9, comme cela est représenté à la figure 4.

Selon un aspect optionnel de l'invention représenté aux figures 2 à 7, le système 1 peut incorporer une chambre auxiliaire 43. La chambre auxiliaire 43 est reliée fluidiquement à la partie amont 15 de la chambre principale 11. Une vanne 45 permet d'ouvrir ou de fermer le passage de l'eau entre la partie amont 15 et la chambre 43. La chambre auxiliaire 43 comprend un piston 430 qui est mobile entre une première position, représentée à la figure 2, dans lequel il est repoussé par un élément élastique, tel qu'un ressort 432, contre l'extrémité de la chambre 43 située du côté de la vanne 45, et une seconde position, représentée à la figure 3, dans laquelle le piston 430 est repoussé, à l'encontre de l'effort exercé par le ressort 432, à l'opposé de la vanne 45.

La chambre auxiliaire 43 est également reliée, par une canalisation 47, à la canalisation principale 9 en aval de la vanne 27. Dans l'exemple représenté, la canalisation 47 rejoint la canalisation 39. En variante, la canalisation 47 peut rejoindre la canalisation principale 9 indépendamment de la canalisation 39.

Dans le mode de réalisation des figures 2 à 7, le système 1 fonctionne de la façon suivante. Dans une configuration de mélange représentée à la figure 2, le dispositif de régulation 60 est configuré de manière à laisser passer une certaine quantité d'eau dans la partie amont 15 de la chambre 11, de sorte que le piston 13 est repoussé vers la partie avale 19 et expulse le produit chimique dans la canalisation 23. La vanne 29 est ouverte dans cette configuration. Les vannes 45, 37 et 41 sont fermées dans cette configuration, de sorte que le mélange d'eau et de produit chimique passant dans la canalisation principale 9 est éjecté par le port de sortie 7.

Une fois que la dispersion du mélange est effectuée, ou que la partie avale 19 a été vidée du produit chimique, le système 1 est contrôlé pour mettre en œuvre une seconde configuration, dite de remplissage, comme représenté à la figure 3. Dans cette configuration, la vanne 29 est fermée et le dispositif de régulation 60 est configuré de façon à empêcher le passage d'eau vers la partie amont 15 de la chambre 11. Simultanément, les vannes 37 et 45 sont ouvertes. L'eau qui continue de circuler dans la canalisation principale 9 remplit donc la chambre 33 via la canalisation 35, selon les flèches F3, et pousse le vérin 31 à l'encontre de la force du ressort 114 dans sa position sortie, de sorte que la tige 312 pousse le piston 13 dans la partie amont 15, selon la flèche F2. Ce mouvement du piston 13 a pour effet de chasser l'eau contenue dans la partie amont 15 vers la chambre 43, et de repousser le piston 430 à l'opposé de la vanne 45.

La translation vers la partie amont 15 du piston 13 et la fermeture de la vanne 29 ont pour effet de créer une dépression qui aspire le produit chimique dans la partie avale 19 de la chambre 11.

Lorsque cette étape se termine, le piston 13 se trouve complètement à l'extrémité amont de la chambre 11, comme cela est représenté à la figure 4.

Le port de sortie 7 du système 1 peut ensuite être nettoyé, comme cela est représenté à la figure 4, en utilisant l'eau accumulée dans les chambres 33 et 43. Pour cela, la vanne 37 est fermée et la vanne 41 est ouverte. Cela a pour effet que les ressorts 314 et 432 repoussent les pistons 310 et 430 selon les flèches F4, qui chassent l'eau contenue dans les chambres 33 et 43 dans les canalisations 35 et 47, selon les flèches F5. Cela permet de nettoyer la partie de la canalisation principale 9 située entre la vanne 27 et le port de sortie 7.

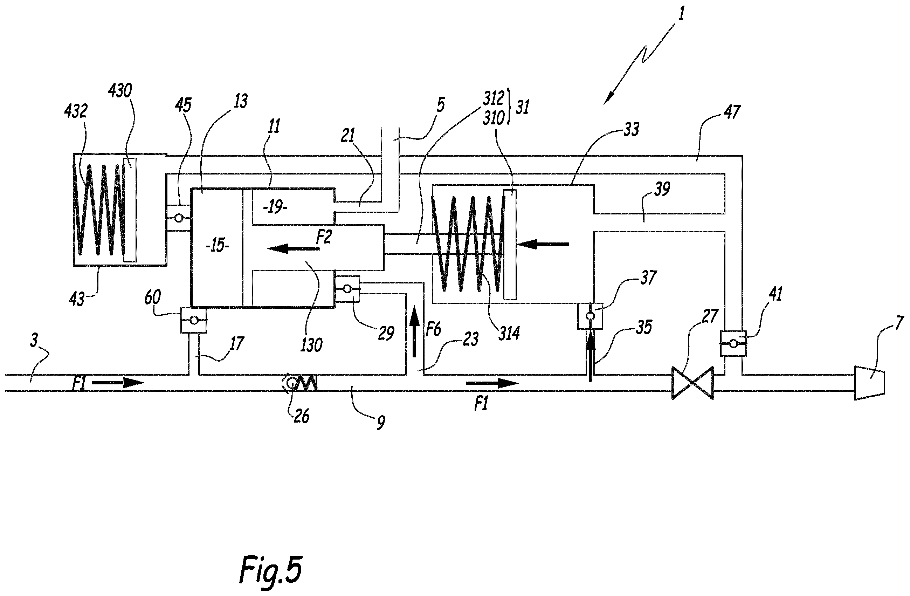

Le système 1 peut également être utilisé dans une autre configuration représentée à la figure 5, et dans laquelle les vannes 29, 37 et 45 sont ouvertes simultanément, de sorte que l'eau circulant dans la canalisation principale 9 remplit la partie avale 19 de la chambre principale 11 en passant par la canalisation 23. Cela permet de nettoyer la partie avale 19, par exemple dans le cas où un produit chimique différent doit être utilisé. Le réservoir de produit chimique 100 est préalablement déconnecté du port d'entrée 5, qui est obturé par des moyens non représentés. Le remplissage de la chambre 33 permet le mouvement du piston 13 vers la partie amont 15 selon la flèche F2, qui entraine l'aspiration d'eau dans la partie avale 19 de la chambre principale 11, via la canalisation 23 selon la flèche F6.

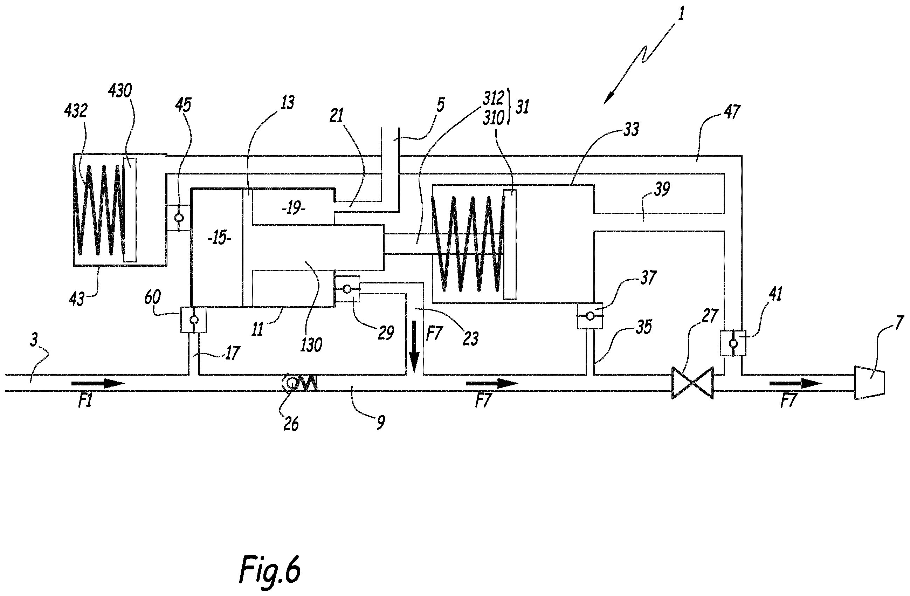

Lorsque le remplissage de la partie avale 19 d'eau est achevé, pour vider la partie amont 19, la vanne 37 est fermée, la vanne 41 est ouverte et le dispositif de régulation 60 est configuré pour laisser entrer l'eau dans la partie amont 15 de la chambre 11, comme cela est représenté à la figure 6. Les vérins 31 et 430 sont donc repoussés par les ressorts 314 et 432 vers leur position rentrée. Le piston 13 est repoussé vers la partie avale 19 par l'eau entrant dans la partie amont 15, ce qui permet de chasser l'eau contenue dans la partie avale 19 vers la canalisation principale 9 selon les flèches F7.

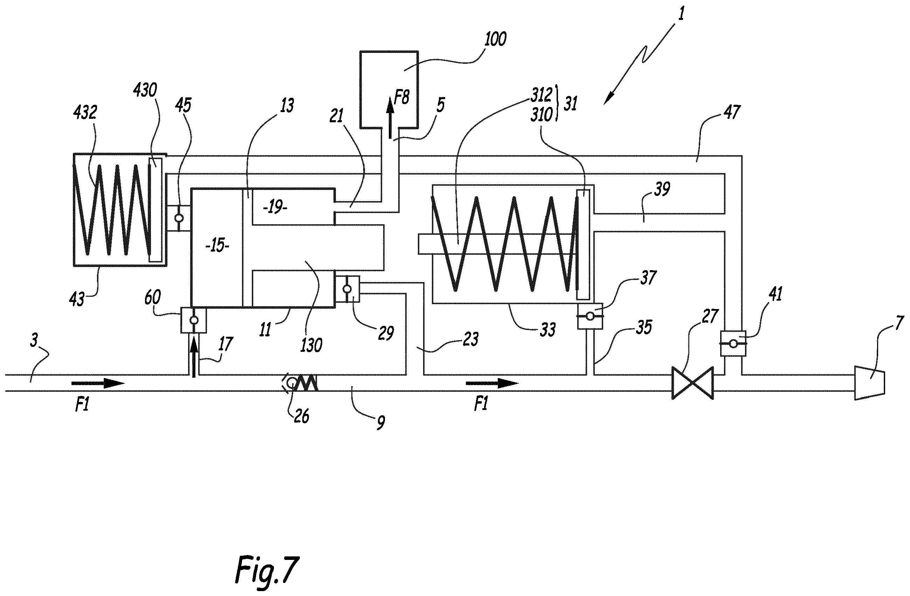

Le système 1 peut également être contrôlé de telle manière que du produit chimique restant dans la partie avale 19 puisse être à nouveau transféré dans le réservoir 100. A cet effet, comme cela est représenté à la figure 7, la vanne 29 est fermée et le dispositif 60 contrôlé de manière à laisser passer l'eau vers la partie amont 15. Ainsi, le piston 13 est poussé vers la partie avale 19, ce qui a pour effet d'expulser le produit chimique contenu dans la partie avale 19 vers la canalisation 21, puis dans le réservoir 100 selon la flèche F8.

Le dispositif 60 et les vannes 29, 37, 41 et 45 peuvent être contrôlés de manière centralisée par l'utilisateur pour enclencher les différents modes de fonctionnement du système 1, par exemple par un circuit électrique contrôlé à partir d'un organe de commande.

Un troisième mode de réalisation de l'invention représenté aux figures 8 et 9. Dans ce mode de réalisation, le système 1 ne comprend pas de vérin 31 ni de chambre auxiliaire 43, mais comprend un circuit de nettoyage 50 raccordé à la canalisation principale 9 en amont de la canalisation 17, et raccordé à la partie avale 19 de la chambre 11. Le passage d'eau vers le circuit de nettoyage 50 est contrôlé par une vanne 52.

Dans ce mode de réalisation, le système 1 comprend également une vanne 54 située sur la canalisation principale 9 en amont de la canalisation 17, et qui permet de bloquer le passage d'eau vers la partie avale de la canalisation principale 9.

Dans ce mode de réalisation, le système 1 fonctionne de la façon suivante. Pour nettoyer avec de l'eau la partie avale 19 de la chambre principale 11, la vanne 52 est ouverte et la vanne 54 est fermée. La vanne 29 est également fermée. L'eau se dirige donc, via le circuit de nettoyage 50 selon la flèche F9, vers la partie avale 19 de la chambre 11, ce qui a pour effet de repousser le piston 13 vers la partie amont 15 selon la flèche F2.

Ensuite, lorsque la partie avale 19 est complètement remplie d'eau, la vanne 52 est fermée tandis que les vannes 54 et 29 sont ouvertes. L'eau entre donc dans la partie amont 15 de la chambre 11 et repousse le piston 13 vers la partie avale 19, ce qui a pour effet de chasser l'eau contenue dans la partie avale 19 vers la canalisation principale 9. Le nettoyage de la partie avale 19 est donc achevé.

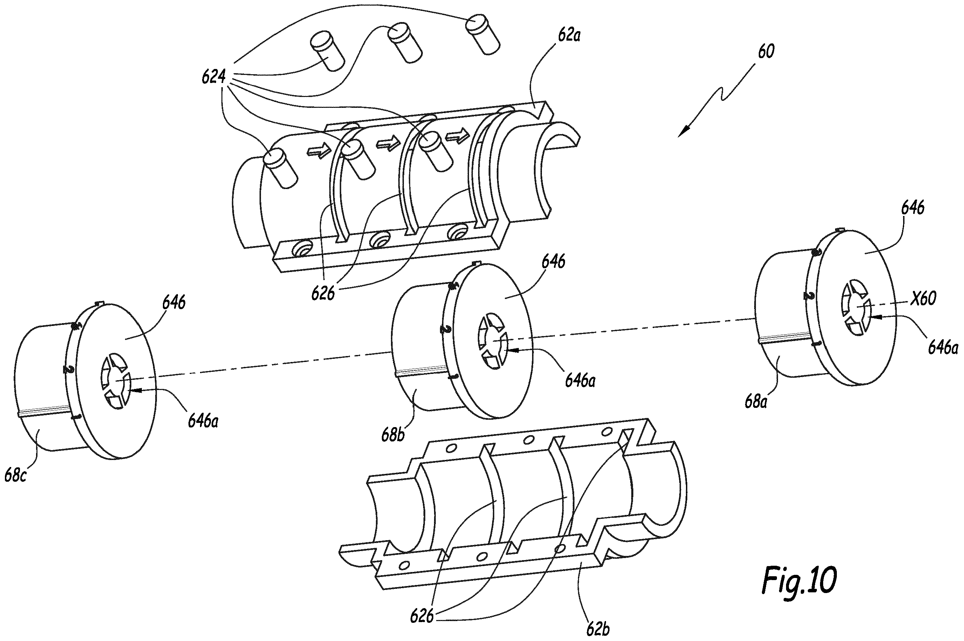

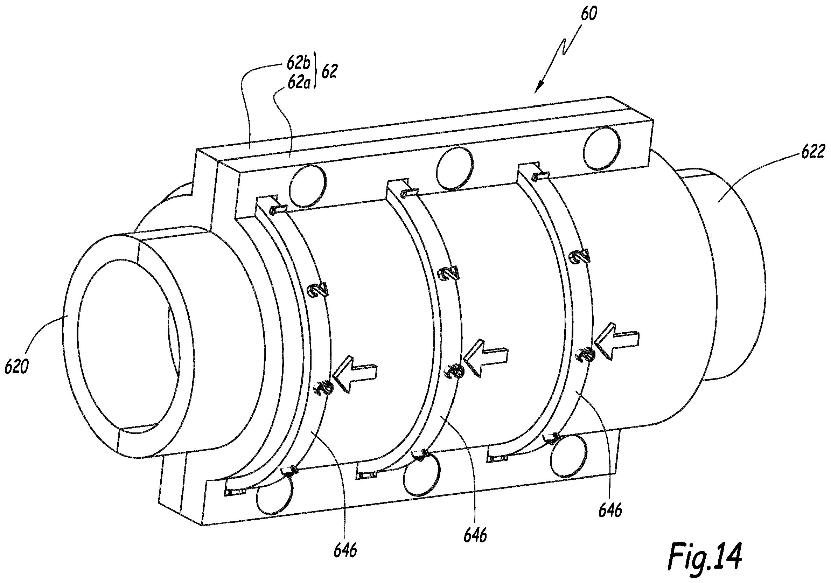

Le dispositif de régulation 60 conforme à l'invention est représenté de façon détaillée sur les figures 10 à 14. Le dispositif de régulation 60 comprend un corps creux 62 incluant un port d'entrée 620 et un port de sortie 622 entre lesquels l'eau est adaptée pour circuler, d'un côté amont vers un côté aval du dispositif 60. Le corps creux 62 est divisé en deux parties 62a et 62b de forme demi-cylindrique fixées l'une à l'autre par des vis 624.

Conformément à l'invention, le dispositif 60 comprend au moins un élément de réglage 64 qui est mobile en rotation dans le corps creux 62 autour d'un axe central X60 du dispositif. Dans l'exemple représenté, le dispositif 60 comprend trois éléments de réglage mobiles 64a, 64b et 64c, permettant un réglage très précis du débit d'eau passant dans le dispositif de régulation 60. Chaque élément de réglage 64 comprend plusieurs disques 640 rotatifs percés chacun de plusieurs orifices 642 de diamètres différents, de préférence croissants. Les orifices 642 sont répartis sur une portion angulaire du disque 140 et permettent le passage de l'eau dans des trous de tailles différentes afin de faire varier le débit de l'eau passant dans le dispositif 60. Dans l'exemple représenté, chaque disque 640 comporte quatre orifices 642. A titre d'exemple, les diamètres des orifices 642 peuvent être compris entre 0,25 mm et 0,8 mm.

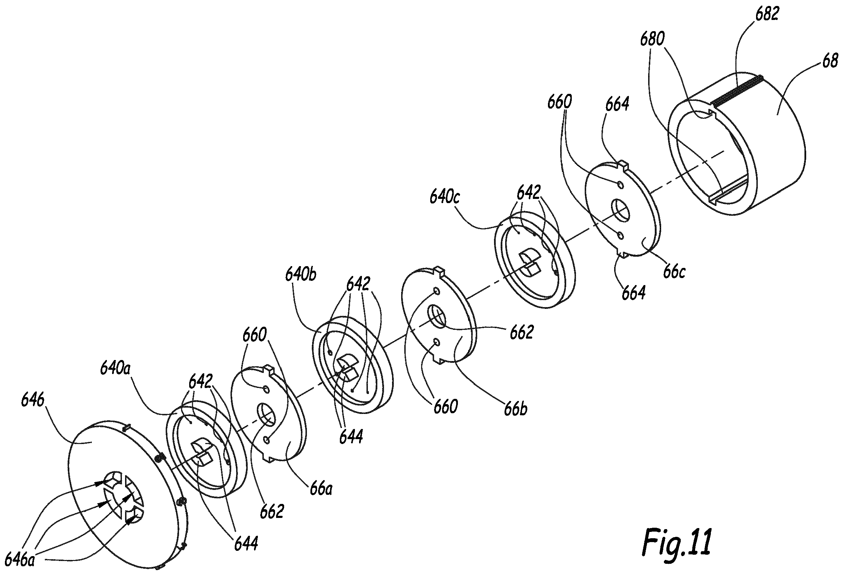

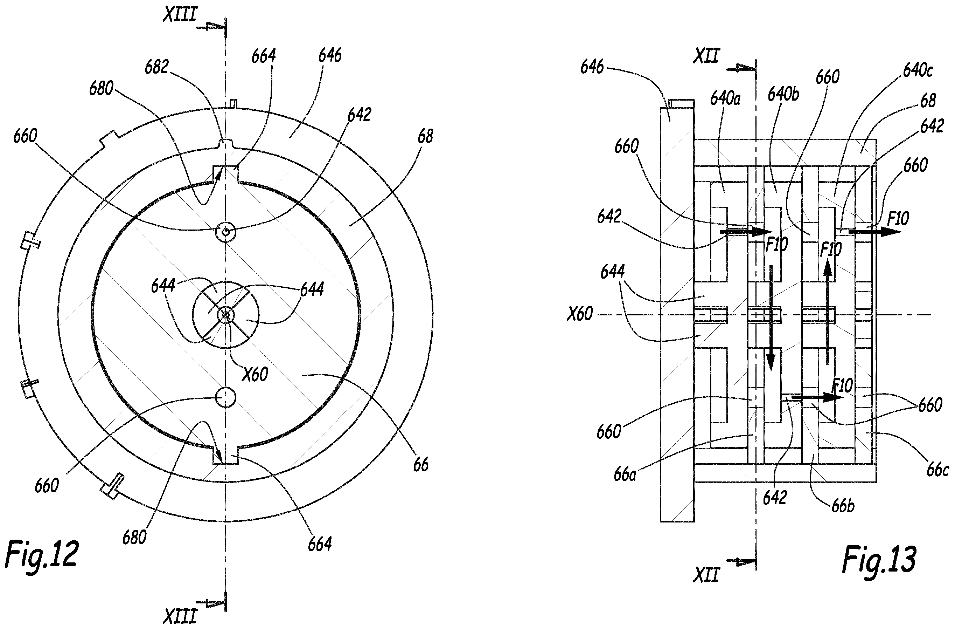

Dans l'exemple représenté, chaque élément de réglage 64 comprend trois disques 640 solidaires les uns des autres en rotation autour de l'axe X60. En variante, chaque élément de réglage 64 peut comprend un nombre différent de disques 640. Trois disques 640 sont représentés sur les figures 11 et 13 avec les références 640a, 640b et 640c.

Le dispositif de régulation 60 comprend des disques intermédiaires 66 fixes par rapport aux éléments de réglage 64 et interposés entre les disques rotatifs 640. Le dispositif 60 comprend autant de disques intermédiaires 66 que de disques rotatifs 640. Dans l'exemple représenté, le dispositif 60 comprend donc trois disques intermédiaires 66a, 66b et 66c. Le disque 66a est interposé entre le disque rotatif 640a et 640b, le disque intermédiaire 66b est interposé entre le disque 640b et 640c, et le disque intermédiaire 66c est placé en aval du disque rotatif 640c.

Chaque disque intermédiaire 66 est percé de deux orifices 660 adaptés pour être mis en regard d'un des orifices 642 des disques rotatifs 640. Les éléments de réglage 64 sont adaptés pour être déplacés en rotation autour de l'axe X60 de manière à placer en vis-à-vis l'un des orifices 642 en vis-à-vis avec l'un des orifices 660. En choisissant l'un des orifices 642, un utilisateur choisit quel débit d'eau il souhaite faire passer dans le dispositif 60.

La présence de plusieurs disques rotatifs 640 et de disques intermédiaires 66 permet de créer des pertes de charge supplémentaires et donc de réduire le débit de liquide passant dans le dispositif 60, ce qui permet d'obtenir des dosages très fins adaptés par exemple à la pulvérisation de produits phytosanitaires.

Afin d'assurer la solidarité en rotation des disques rotatifs 640, les disques intermédiaires 66 comprennent chacun en leur centre un trou 662 à travers lequel des formes protubérantes complémentaires 644 des disques rotatifs 640 s'étendent. Dans l'exemple représenté, les formes complémentaires 644 sont des pions s'étendant selon l'axe X60 et disposés de façon diamétralement opposée par rapport à l'axe X60. Deux formes 644 diamétralement opposées de l'un des disques 640 coopèrent avec deux formes 644 diamétralement opposées d'un autre disque 640 de manière à solidariser en rotation ces deux disques 640.

Les disques intermédiaires 66 sont montés de manière fixe dans un tube 68, qui est lui-même monté de façon fixe dans le corps creux 62. Les disques rotatifs 640 sont montés de façon rotative dans le tube 68. Chaque disque intermédiaire 66 comprend deux pions 664 adaptés chacun pour s'insérer dans deux rainures 680 prévues sur une surface intérieure du tube 68. Le tube 68 comprend une nervure externe 682 adaptée pour s'insérer dans une rainure correspondante non représentée d'une surface interne du corps creux 62 afin d'assurer le blocage en rotation du tube 68 dans le corps creux 62.

Chaque élément de réglage 64 comprend un cadran 646 solidaire en rotation des disques rotatifs 640 et adapté pour être manipulé par un utilisateur pour régler la position de l'élément de réglage 64. Chaque cadran 646 est muni de repères de positionnement adaptés pour être visualisés à travers une ouverture 626 du corps creux 62.

Les cadrans 646 comportent des ouvertures 646a par lesquelles l'eau est dirigée vers les disques rotatifs 640 et les disques intermédiaires 66.

Le dispositif de régulation 60 comprend, dans l'exemple représenté, trois éléments de réglage 64a, 64b et 64c réglables indépendamment et montés chacun dans un tube respectif 68a, 68b et 68c dans lequel des disques intermédiaires 66 sont également montés. Chaque élément de réglage 64 forme, avec ses disques intermédiaires 66 et son tube 68, un module pouvant être assemblé séparément et monté dans le corps creux 62, comme cela est représenté à la figure 10.

Les éléments de réglage 64 sont placés les uns derrière les autres le long de l'axe X60, de sorte que l'eau passe successivement dans neuf orifices 642 et neuf orifices 660.

Selon un mode de réalisation non représenté, le dispositif 60 peut ne comprendre qu'un seul élément de réglage 64, ou bien un nombre d'éléments de réglage 64 différent de trois.

Afin de générer des pertes de charge plus importantes et donc d'obtenir des débits le plus faibles et une précision de réglage plus importante, les orifices 642 respectifs de deux disques rotatifs 640 adjacents sont décalés angulairement par rapport à l'axe central X60. Cela est représenté plus précisément à la figure 11. Les orifices 642 du disque rotatif 640a s'étendent de façon diamétralement opposée par rapport à l'axe X60 par rapport aux orifices 642 du disque rotatif 640b. Cela est également le cas entre les disques rotatifs 640b et 640c. De cette façon, comme cela est représenté à la figure 13, de l'eau traversant un élément de réglage 64 du dispositif 60 doit passer dans des chicanes formées par les orifices 642, comme cela est représenté par les flèches F10. De préférence, le décalage angulaire des orifices 642 de deux disques rotatifs 640 adjacents est de 180°, ce qui signifie, comme c'est le cas dans l'exemple représenté, que les orifices 642 sont diamétralement opposés.

La présence de deux orifices 660 sur les disques intermédiaires 66 permet, en combinaison avec les quatre orifices 642 des disques rotatifs 640, de disposer de huit positions pour les éléments de réglage 64. Cela permet de créer des parcours en chicane supplémentaires pour le flux d'eau en positionnant les éléments de réglage 64a, 64b et 64c de telle manière que l'eau passant d'un élément de réglage 64 à l'autre emprunte un parcours en chicane. Par exemple, si on considère que l'élément de réglage 64 de la figure 13 est l'élément de réglage 64a, il est possible de positionner l'élément de réglage adjacent 64b afin que l'orifice 642 du disque rotatif 640c de l'élément de réglage 64a soit diamétralement opposé à l'orifice 642 du disque rotatif 640a de l'élément de réglage 64b.

Selon un mode de réalisation non représenté, les disques intermédiaires 66 peuvent ne comprendre qu'un seul orifice 660. Dans le cas où les disques rotatifs 640 comprennent quatre orifices 642 de diamètre croissant, les éléments de réglage 64 peuvent prendre cinq positions, dont l'une met en vis-à-vis l'orifice 660 avec une partie non percée d'un disque 640, permettant d'empêcher l'écoulement d'eau dans le dispositif 60. Dans un tel cas, le dispositif 60 peut jouer le rôle d'une vanne. Dans le cas où chaque disque intermédiaire 66 ne comprend qu'un seul orifice 660, les orifices 660 respectifs de deux disques intermédiaires 66 adjacents sont décalés angulairement par rapport à l'axe central X66, de préférence d'un angle de 180°, ce qui permet l'établissement d'une trajectoire en chicane pour l'eau traversant le dispositif 60.

Selon un mode de réalisation non représenté de l'invention, le dispositif de régulation 60 peut également être intégré dans des systèmes différents du système de mélange 1, c'est-à-dire dans tout autre système nécessitant le contrôle précis du débit d'un liquide quel qu'il soit.

Le dispositif 60 peut être adapté pour la régulation du débit d'autres liquides que l'eau en fonction de l'application choisie.

Les caractéristiques des modes de réalisation et variantes décrits ci-dessus peuvent être combinées pour former de nouveaux modes de réalisation de l'invention.

## Revendications

1. Dispositif de régulation (60) du débit d'un liquide dans une canalisation, comprenant un corps creux (62) incluant un port d'entrée (620) et un port de sortie (622) entre lesquels un liquide est adapté pour circuler, le dispositif (60) comportant:
au moins un élément de réglage (64) mobile en rotation dans le corps creux (62), ledit au moins un élément de réglage (64) comprenant plusieurs disques rotatifs (640) solidaires en rotation les uns des autres et percés chacun de plusieurs orifices (642), et
plusieurs disques intermédiaires (66) fixes par rapport au dit au moins un élément de réglage (64) et interposés entre les disques rotatifs (640), les plusieurs disques intermédiaires (66) étant percés d'au moins un orifice (660),
dans lequel ledit au moins un élément de réglage (64) est adapté pour être déplacé en rotation de manière à placer en vis-à-vis l'un des orifices (642) des plusieurs disques rotatifs (640) avec l'au moins un orifice (660) des plusieurs disques intermédiaires (66),
le dispositif étant **caractérisé en ce que** les disques rotatifs solidaires en rotation sont percés chacun de plusieurs orifices de diamètres différents et **en ce que** ledit au moins un élément de réglage (64) comprend un cadran (646), ledit cadran (646) étant solidaire en rotation des plusieurs disques rotatifs (640) et adapté pour être manipulé par un utilisateur pour régler la position des plusieurs disques rotatifs (640) par rapport aux plusieurs disques intermédiaires (66).

2. Dispositif de régulation selon la revendication 1, **caractérisé en ce que** les orifices (660) respectifs de deux disques intermédiaires (66) adjacents et les orifices (642) respectifs de deux disques rotatifs (640) adjacents sont décalés angulairement par rapport à un axe central (X60) du dispositif (60), de préférence d'un angle de 180°.

3. Dispositif de régulation selon la revendication 2, **caractérisé en ce que** chaque disque intermédiaire (66) comprend deux orifices (660) diamétralement opposés par rapport à un axe central (X60) du dispositif (60).

4. Dispositif de régulation selon l'une des revendications précédentes, **caractérisé en ce que** ledit cadran (646) est muni de repères de positionnement adaptés pour être visualisés à travers une ouverture (626) du corps creux (62).

5. Dispositif de régulation selon l'une des revendications précédentes, **caractérisé en ce que** les disques intermédiaires (66) sont montés de manière fixe dans un tube (68) monté de façon fixe dans le corps creux (62), et **en ce que** les disques rotatifs (640) sont montés de façon rotative dans le tube (68).

6. Dispositif de régulation selon l'une des revendications précédentes, **caractérisé en ce que** ledit au moins un élément de réglage (64) comprend trois disques rotatifs (640a, 640b, 640c).

7. Dispositif de régulation selon l'une des revendications précédentes, **caractérisé en ce qu'**il comprend trois éléments de réglage (64a, 64b, 64c) réglables indépendamment.

8. Dispositif de régulation selon l'une des revendications précédentes, **caractérisé en ce que** chaque disque rotatif (640) comprend quatre orifices (642) de diamètres croissants.

9. Dispositif de régulation selon l'une des revendications précédentes, **caractérisé en ce que** les disques rotatifs (640) sont solidarisés en rotation les uns aux autres par des formes protubérantes complémentaires (644) qui s'étendent à travers des trous (662) ménagés dans les disques intermédiaires (66).

10. Système de mélange (1) d'un produit chimique avec de l'eau, **caractérisé en ce qu'**il comprend un dispositif de régulation (60) selon l'une des revendications précédentes adapté pour réguler la quantité d'eau mélangée au produit chimique.

## Patentansprüche

1. Vorrichtung (60) zum Regulieren des Flusses einer Flüssigkeit in einer Rohrleitung, die einen Hohlkörper (62) mit einer Einlassöffnung (620) und einer Auslassöffnung (622) umfasst, zwischen denen eine Flüssigkeit fließen kann, wobei die Vorrichtung (60) Folgendes umfasst:
mindestens ein Regulierelement (64), das sich in dem Hohlkörper (62) drehen kann, wobei das mindestens eine Regulierelement (64) mehrere Drehscheiben (640) umfasst, die drehfest miteinander verbunden und jeweils mit mehreren Öffnungen (642) durchbohrt sind, und
mehrere Zwischenscheiben (66), die in Bezug auf das mindestens eine Regulierelement (64) fest und zwischen den Drehscheiben (640) angeordnet sind, wobei die mehreren Zwischenscheiben (66) mit mindestens einer Öffnung (660) durchbohrt sind,
wobei das mindestens eine Regulierelement (64) für eine Drehbewegung ausgelegt ist, um eine der Öffnungen (642) der mehreren Drehscheiben (640) gegenüber der mindestens einen Öffnung (660) der mehreren Zwischenscheiben (66) zu platzieren,
wobei die Vorrichtung **dadurch gekennzeichnet ist, dass** die drehfesten Drehscheiben jeweils mit mehreren Öffnungen mit unterschiedlichen Durchmessern durchbohrt sind, und dadurch, dass das mindestens eine Regulierelement (64) eine Wählscheibe (646) umfasst, wobei die Wählscheibe (646) drehfest mit den mehreren Drehscheiben (640) verbunden und zum Manipulieren durch einen Benutzer ausgelegt ist, um die Position der mehreren Drehscheiben (640) relativ zu den mehreren Zwischenscheiben (66) zu regulieren.

2. Reguliervorrichtung nach Anspruch 1, **dadurch gekennzeichnet, dass** die jeweiligen Öffnungen (660) zweier benachbarter Zwischenscheiben (66) und die jeweiligen Öffnungen (642) zweier benachbarter Drehscheiben (640) in Bezug auf eine Mittelachse (X60) der Vorrichtung (60) winkelmäßig versetzt sind, vorzugsweise um einen Winkel von 180°.

3. Reguliervorrichtung nach Anspruch 2, **dadurch gekennzeichnet, dass** jede Zwischenscheibe (66) zwei diametral gegenüberliegende Öffnungen (660) in Bezug auf eine Mittelachse (X60) der Vorrichtung (60) aufweist.

4. Reguliervorrichtung nach einem der vorherigen Ansprüche, **dadurch gekennzeichnet, dass** die Wählscheibe (646) mit Positionierungsmarkierungen versehen ist, die durch eine Bohrung (626) des Hohlkörpers (62) betrachtet werden können.

5. Reguliervorrichtung nach einem der vorherigen Ansprüche, **dadurch gekennzeichnet, dass** die Zwischenscheiben (66) fest in einem Rohr (68) montiert sind, das fest in dem Hohlkörper (62) montiert ist, und dadurch, dass die Drehscheiben (640) drehbar in dem Rohr (68) montiert sind.

6. Reguliervorrichtung nach einem der vorherigen Ansprüche, **dadurch gekennzeichnet, dass** das mindestens eine Regulierelement (64) drei Drehscheiben (640a, 640b, 640c) umfasst.

7. Reguliervorrichtung nach einem der vorherigen Ansprüche, **dadurch gekennzeichnet, dass** sie drei unabhängig regulierbare Regulierelemente (64a, 64b, 64c) umfasst.

8. Reguliervorrichtung nach einem der vorherigen Ansprüche, **dadurch gekennzeichnet, dass** jede Drehscheibe (640) vier Öffnungen (642) mit zunehmendem Durchmesser aufweist.

9. Reguliervorrichtung nach einem der vorherigen Ansprüche, **dadurch gekennzeichnet, dass** die Drehscheiben (640) durch komplementäre vorstehende Formen (644), die sich durch in den Zwischenscheiben (66) angebrachte Löcher (662) erstrecken, drehfest miteinander verbunden sind.

10. System zum Mischen (1) eines chemischen Produkts mit Wasser, **dadurch gekennzeichnet, dass** es eine Reguliervorrichtung (60) nach einem der vorherigen Ansprüche umfasst, die zum Regulieren der Menge des mit dem chemischen Produkt gemischten Wassers ausgelegt ist.

## Claims

1. Device (60) for controlling the flow of a liquid in piping, comprising a hollow body (62) comprising an inlet port (620) and an outlet port (622), between which a liquid is able to flow, the device (60) comprising:
at least one adjustment element (64) able to move in rotation in the hollow body (62), said at least one adjustment element (64) comprising a plurality of rotatable discs (640) arranged for conjoint rotation with one another and each pierced by a plurality of orifices (642), and
a plurality of intermediate discs (66) which are fixed with respect to said at least one adjustment element (64) and interposed between the rotatable discs (640), the plurality of intermediate discs (66) being pierced by at least one orifice (660),
wherein said at least one adjustment element (64) is adapted to be displaced in rotation so as to place one of the orifices (642) of the plurality of rotatable discs (640) opposite the at least one orifice (660) of the plurality of intermediate discs (66),
the device being **characterised in that** the rotatable discs arranged for conjoint rotation are each pierced by a plurality of orifices of different diameters, and **in that** said at least one adjustment element (64) comprises a dial (646), said dial (646) being arranged for conjoint rotation with the plurality of rotatable discs (640) and adapted to be manipulated by a user to adjust the position of the plurality of rotatable discs (640) with respect to the plurality of intermediate discs (66).

2. Control device as claimed in claim 1, **characterised in that** the respective orifices (660) of two adjacent intermediate discs (66) and the respective orifices (642) of two adjacent rotatable discs (640) are angularly offset relative to a central axis (X60) of the device (60), preferably by an angle of 180°.

3. Control device as claimed in claim 2, **characterised in that** each intermediate disc (66) comprises two orifices (660) which are diametrically opposed relative to a central axis (X60) of the device (60).

4. Control device as claimed in any one of the preceding claims, **characterised in that** said dial (646) is provided with positioning markers able to be viewed through an opening (626) in the hollow body (62).

5. Control device as claimed in any one of the preceding claims, **characterised in that** the intermediate discs (66) are fixedly mounted in a tube (68) fixedly mounted in the hollow body (62), and **in that** the rotatable discs (640) are rotatably mounted in the tube (68).

6. Control device as claimed in any one of the preceding claims, **characterised in that** said at least one adjustment element (64) comprises three rotatable discs (640a, 640b, 640c).

7. Control device as claimed in any one of the preceding claims, **characterised in that** it comprises three adjustment elements (64a, 64b, 64c) able to be adjusted independently.

8. Control device as claimed in any one of the preceding claims, **characterised in that** each rotatable disc (640) comprises four orifices (642) having increasing diameters.

9. Control device as claimed in any one of the preceding claims, **characterised in that** the rotatable discs (640) are arranged for conjoint rotation with one another by complementary protruding shapes (644) which extend through holes (662) provided in the intermediate discs (66).

10. System (1) for mixing a chemical product with water, **characterised in that** it comprises a control device (60) as claimed in any one of the preceding claims, suitable for controlling the quantity of water mixed with the chemical product.
